Europäisches Patentamt

European Patent Office

Office européen des brevets

(19)

(11) Veröffentlichungsnummer: **0 015 405**
**A1**

## (12) EUROPÄISCHE PATENTANMELDUNG

(21) Anmeldenummer: **80100653.7**

(22) Anmeldetag: **08.02.80**

(51) Int. Cl.³: **H 04 N 3/36**

(30) Priorität: **13.03.79 DE 2909778**

(43) Veröffentlichungstag der Anmeldung: **17.09.80**
**Patentblatt 80/19**

(84) Benannte Vertragsstaaten: **AT BE CH FR GB IT LU NL SE**

(71) Anmelder: **Rollei-Werke Franke & Heidecke GmbH + Co KG, Salzdahlumer Strasse 196, D-3300 Braunschweig (DE)**

(72) Erfinder: **Wentz, Wilfried, Dr.-Ing., Am Rotzenberg 2b, D-6120 Michelstadt (DE)**

(74) Vertreter: **Pretzell, Hellmut, Dipl.-Ing., Salzdahlumer Strasse 196, D-3300 Braunschweig (DE)**

(54) **Vorrichtung zur punktweisen Abtastung einer Bildvorlage.**

(57) Es wird eine Vorrichtung zur punktweisen Abtastung einer Bildvorlage, insbesondere eines Diapositivs oder eines Super-8-Films, für deren Wiedergabe in Fernsehgeräten angegeben, die ein angetriebenes Schlitzblendensystem mit zwei in parallelen Ebenen relativ zueinander bewegten Schlitzblenden aufweist. Zur konstruktiv und fertigungstechnisch wesentlich einfacheren Gestaltung der Abtastvorrichtung bei gleichzeitiger Volumenreduzierung für deren Unterbringung ist vorgesehen, daß die Schlitzblenden (11, 12) zumindest im Bereich der Bildvorlage (20) sich gegeneinander in gegensinniger Bewegungsrichtung verschieben und die Schlitze (15, 16) in den beiden Schlitzblenden gegeneinander und in die jeweilige Bewegungsrichtung (37, 38) geneigt ausgerichtet sind. Dabei wird mittels der einen, ersten Schlitzblende (11) die nach Fernsehnorm erforderliche abzutastende Zeilenzahl n der Bildvorlage (20) und mittels der anderen, zweiten Schlitzblende (12) die nach Fernsehnorm erforderliche Bildfrequenz bestimmt.

**EP 0 015 405 A1**

Rollei-Werke
Franke & Heidecke
GmbH & Co KG
Salzdahlumer Str. 196

3300 Braunschweig                          02.02.1979
                                           A 1155 EU


Vorrichtung zur punktweisen
Abtastung einer Bildvorlage


Die Erfindung betrifft eine Vorrichtung zur punktweisen Abtastung einer Bildvorlage, insbesondere eines Diapositivs oder eines Super-8-Films, für deren
Wiedergabe in Fernsehgeräten, der im Oberbegriff des Anspruchs 1 definierten
Gattung.

Mit einer solchen Abtastvorrichtung wird die Bildvorlage in einzelne Bildpunkte
zerlegt, die nach Zwischenumwandlung in ein elektrisches Signal auf dem Bildschirm des Fernsehgerätes zu einem fertigen Bild zusammengesetzt werden. Die
Zwischenumwandlung der einzelnen Bildpunkte in elektrische Signale gestattet
in vielfältiger Weise die Speicherung, Fernübertragung und Vervielfachung der
Bilddarstellung.

Eine bekannte Abtastvorrichtung der eingangs genannten Art weist eine Projektionseinrichtung auf, mittels welcher ein Diapositiv auf der Blendenebene des
Schlitzblendensystems abgebildet wird. Das Blendensystem besteht aus einer
endlos umlaufend ausgebildeten Blendenmanschette und einer zur Bewegungsrichtung der Blendenmanschette quer verfahrbaren Schieberblende. Auf dem Umfang
der Blendenmanschette sind mehrere dünne Schlitze in gleichen Abständen angeordnet, deren Abstand voneinander der in Bewegungsrichtung der Blendenmanschette gesehenen Breite des auf die Blendenebene projizierten Bildes ist. Die

- 2 -

unmittelbar über der Blendenmanschette angeordnete Schieberblende weist einen einzigen Schlitz auf, der quer zu den Schlitzen auf der Blendenmanschette ausgerichtet ist. Die Schlitzbreite der Schlitze auf der Blendenmanschette und auf der Schieberblende beträgt etwa 0,1 - 0,2 mm. Der Kreuzungspunkt von jeweils einem Schlitz in der Blendenmanschette und dem Schlitz in der Schieberblende bildet eine etwa punktförmige Lichtdurchtrittsöffnung, die sich bei entsprechendem Antrieb der Blendenmanschette und der Schieberblende gleichmäßig über das projizierte Bild bewegt. Das durch die Lichtdurchtrittsöffnung hindurchtretende Licht fällt auf einen unterhalb des Schlitzblendensystems angeordneten Strahlenteiler, der das Licht in seine Grundfarben, z.B. rot, blau, grün, zerlegt. Über teildurchlässige Spiegel und/oder entsprechende Farbfilter gelangen die einzelnen Grundfarbenanteile des Lichtes auf Fotoempfänger, die entsprechende elektrische Signale erzeugen.

Das Schlitzblendensystem dieser bekannten Abtastvorrichtung erfordert ein relativ kompliziertes und aufwendiges Antriebssystem. Die Schieberblende muß mit einer bestimmten unsteten Geschwindigkeit translatorisch derart angetrieben werden, daß sie sich in etwa gleichmäßig in Vorwärtsrichtung bewegt und schlagartig in ihre Ausgangsstellung zurückführt. Die Blendenmanschette hin- gegen benötigt einen Rotationsantrieb mit konstanter Drehzahl. Beide Antriebe müssen miteinander synchronisiert werden. Das hierzu erforderliche Über- bzw. Untersetzungsgetriebe, das Umsetzungsgetriebe von einer Rotations- bewegung in eine translatorische Antriebsbewegung und die Synchronisationseinrichtung für einen oder zwei Antriebsmotore sind ursächlich für hohe Fertigungskosten dieser mechanischen Abtastvorrichtung. Eine solche mechanische Abtastvorrichtung ist somit aus Preisgründen gegenüber den elektronischen Lichtpunktabtastern nicht konkurrenzfähig. Auch der Raumbedarf für eine solche mechanische Abtastvorrichtung ist beträchtlich, so daß diese auch in diesem Punkt den auf elektronischer Basis arbeitenden Abtastvorrichtungen unterlegen sind.

Der Erfindung liegt daher die Aufgabe zugrunde, eine Vorrichtung zur punktweisen Abtastung einer Bildvorlage der eingangs genannten Art konstruktiv und fertigungstechnisch wesentlich einfacher zu gestalten, so daß diese preiswerter hergestellt werden und damit in Konkurrenz zu den elektronischen Abtastgeräten treten kann. Gleichzeitig soll dabei auch das für die Unterbringung einer solchen Abtastvorrichtung benötigte Raumvolumen möglichst klein gehalten werden.

Diese Aufgabe ist bei einer Vorrichtung zur punktweisen Abtastung einer Bildvorlage der im Oberbegriff des Anspruchs 1 definierten Gattung erfindungsgemäß durch die Merkmale im Kennzeichnungsteil des Anspruchs 1 gelöst.

Das Schlitzblendensystem besteht hier lediglich aus zwei gegeneinander mit fest vorgegebener Geschwindigkeit rotierenden Schlitzblenden, die jeweils von einem Synchronmotor angetrieben werden können. Herstellung und Montage sind denkbar einfach, insbesondere wenn die Schlitzblenden gemäß einem bevorzugten Ausführungsbeispiel der Erfindung als rotierende koaxiale Scheiben ausgebildet sind. Voluminöse und teuere Über- bzw. Untersetzungsgetriebe entfallen völlig. Das Auflösungsvermögen dieses Schlitzblendensystems ist sehr groß und den elektronischen Lichtpunktabtastern ebenbürtig.

Der vollständige Wortlaut des Anspruchs ist vorstehend allein zur Vermeidung unnötiger Wiederholungen nicht wiedergegeben, sondern statt dessen lediglich durch Nennung der Anspruchsnummer darauf Bezug genommen. Hierdurch haben jedoch alle diese Anspruchsmerkmale als an dieser Stelle ausdrücklich und erfindungswesentlich offenbart zu gelten.

Weitere Ausführungsformen der Erfindung mit erfindungswesentlichen Ausgestaltungen und Weiterbildungen sind Gegenstand der Unteransprüche, auf die hier ausdrücklich Bezug genommen wird. Diese weiteren Ausführungsformen der Erfindung sind in der Beschreibung im einzelnen näher erläutert.

Die Erfindung ist anhand eines in der Zeichnung dargestellten Ausführungsbeispiels im folgenden beschrieben. Es zeigen:

Fig. 1    eine Seitenansicht einer Abtastvorrichtung,
          schematisch dargestellt,

Fig. 2    eine Draufsicht auf ein Schlitzblendensystem der
          Abtastvorrichtung in Richtung Pfeil II in Fig. 1,

Fig. 3    eine Draufsicht auf das Schlitzblendensystem der
          Abtastvorrichtung in Richtung Pfeil III in Fig. 1,

Fig. 4    eine vergrößerte Darstellung des Ausschnitts IV

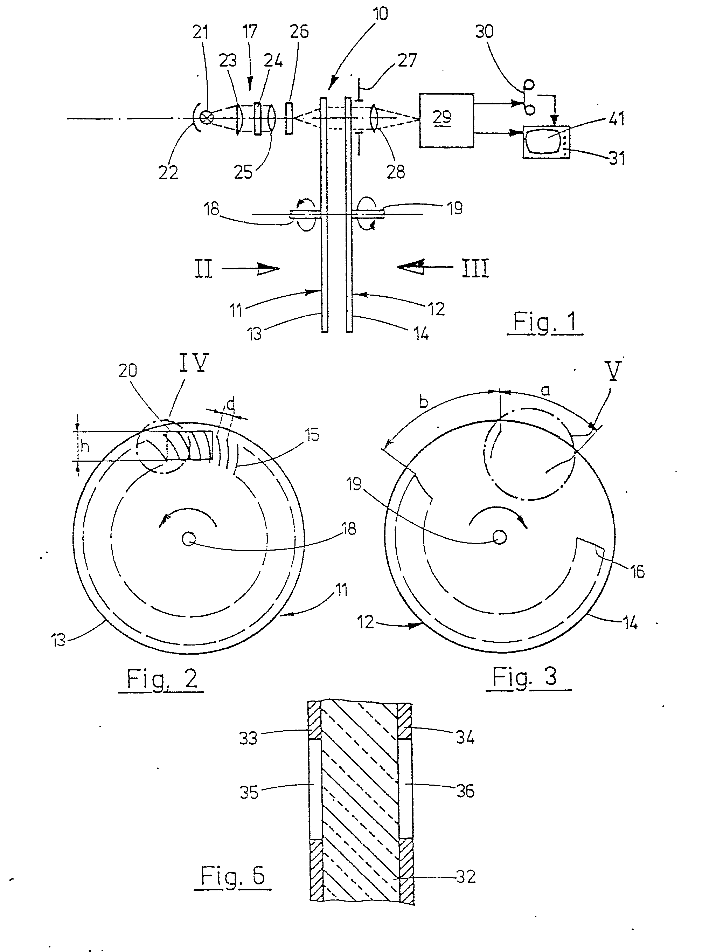

          in Fig. 2,

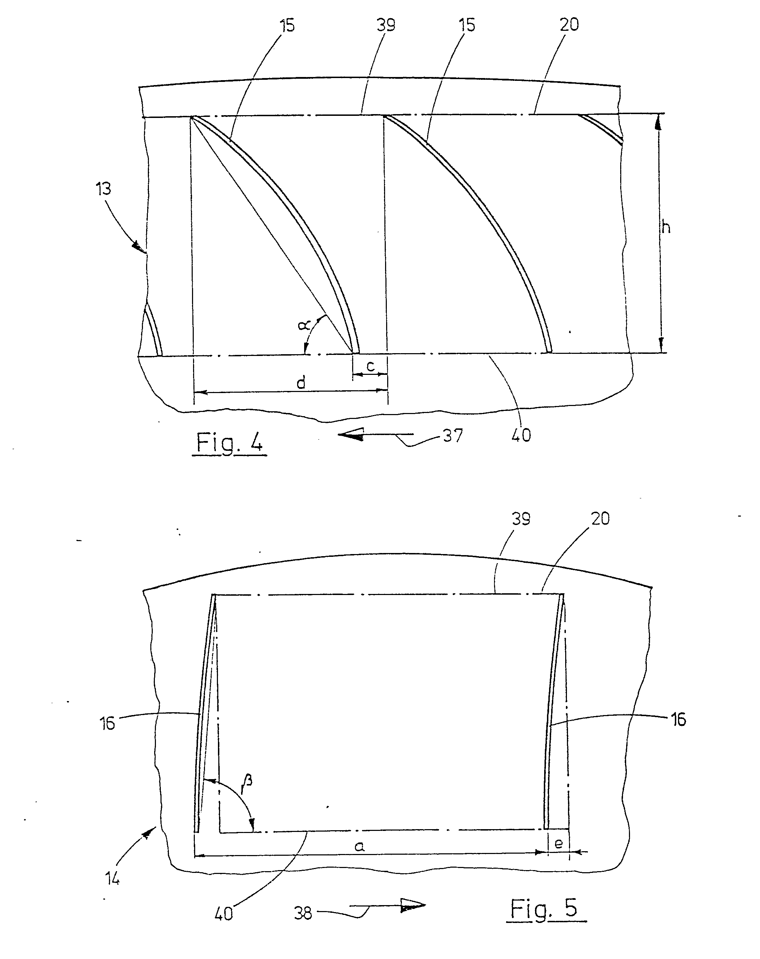

Fig. 5    eine vergrößerte Darstellung des Ausschnitts V
          in Fig. 3,

Fig. 6    ausschnittsweise einen Längsschnitt einer Schlitzblende des Schlitzblendensystems in Fig. 2 oder 3.

Die Vorrichtung zur punktweisen Abtastung einer Bildvorlage, im folgenden
kurz Abtastvorrichtung genannt, ist vorzugsweise für die Abtastung von Diapositiven oder Super-8-Filmen geeignet. Die Abtastvorrichtung weist ein
Schlitzblendensystem 10 mit einer ersten Schlitzblende 11 und einer zweiten
Schlitzblende 12 auf. Die beiden Schlitzblenden 11 und 12 sind hier als rotierende, koaxiale Scheiben 13, 14 ausgebildet. Die Scheiben 13, 14 sind
- wie später noch ausführlich ausgeführt wird - mit Schlitzen 15 bzw. 16
versehen, deren Kreuzungspunkte eine Lichtdurchtrittsöffnung bilden. Die
Scheiben 13 und 14 werden über ihre Wellen 18, 19 von hier nicht dargestellten Synchronmotoren gegensinnig mit unterschiedlicher, aber konstanter Geschwindigkeit angetrieben.

Die Bildvorlage wird mittels einer Projektionseinrichtung 17 unmittelbar auf
die erste Scheibe 13 projiziert. Diese projizierte Bildvorlage ist in Fig. 2
schematisch dargestellt und mit 20 bezeichnet. Die Projektionseinrichtung 17,
in Fig. 1 schematisch dargestellt, weist wie üblich und in der genannten
Reihenfolge eine mit einem Reflektor 22 versehene Projektionslampe 21,
eine asphärische Linse 23, ggf. ein Wärmeschutzfilter 24, eine Frontlinse 25

und einen Diahalter 26 auf, in welchen das auf dem Bildschirm des Fernsehgerätes darzustellende Dia eingeschoben wird. Im Strahlengang dem Schlitzblendensystem 10 nachgeordnet ist eine Begrenzungsmaske 27 und ein Kondensorsystem 28, das in bekannter Weise das durch das Schlitzblendensystem 10 hindurchtretende Licht einem Strahlenteiler zuleitet, welcher das Licht in seine
Grundfarben, z.B. rot, blau, grün, zerlegt und das zerlegte Licht einzelnen
Fotoempfängern zuführt. Strahlenteiler, Fotoempfänger und die gesamte elektronische Einrichtung zur Aufbereitung und Weiterleitung der aus den Fotoempfängern gewonnenen elektrischen Signale ist in Fig. 1 symbolisch durch
den Kasten 29 dargestellt. Diese Bauelemente sind vielfältig bekannt und
bedürfen hier keiner weiteren Erläuterung. Die elektrischen Signale können
entweder auf einem Magnetband 30 gespeichert und von hier aus oder auch
unmittelbar einem Fernsehgerät 31 zugeführt werden, das dann die elektrischen Signale in entsprechende Bildpunkte umsetzt und die Bildvorlage 20 auf
dem Fernsehschirm 41 sichtbar macht.

Die erste Scheibe 13 und die zweite Scheibe 14 sind jeweils - wie bereits
erwähnt - mit Schlitzen 15 bzw. 16 versehen. Diese Schlitze sind jeweils
in ihre Bewegungs- oder Rotationsrichtung und zudem auch gegeneinander
geneigt. Da die Scheiben 13 und 14 gegensinnig rotieren, verschieben sich
die Schlitze 13 und 14 gegeneinander in gegensinniger Bewegungsrichtung,
wobei der gemeinsame Kreuzungspunkt vom Außenrand der Scheiben
allmählich zum Scheibenmittelpunkt hin wandert. Die Scheiben 13, 14
weisen jeweils einen transparenten Scheibenkörper 32 auf (Fig. 6). Die
Schlitze 15 bzw. 16 auf jeder Scheibe 13 bzw. 14 werden dadurch gebildet,
daß der transparente Scheibenkörper 32 beidseitig mit einer die Schlitze 15
bzw. 16 aussparenden opaken Schicht 33 bzw. 34 belegt ist. Die den Schlitzen
15, 16 entsprechenden Aussparungen 35 bzw. 36 in jeder der opaken Schichten 33, 34 sind zueinander deckungsgleich angeordnet. Die hierdurch gebildeten
Schlitze 15, 16 sind jeweils in Rotationsrichtung leicht gekrümmt, und zwar
derart, daß bei vorgegebener Rotationsgeschwindigkeit beider Scheiben
13, 14 der Kreuzungspunkt eines Schlitzes 14 mit einem Schlitz 15 sich mit
konstanter Geschwindigkeit vom Scheibenaußenrand zum Scheibeninneren hin

- 6 -

bewegt, also quer zur Bewegungs- bzw. Rotationsrichtung der Scheiben 13, 14.

Mit der ersten Scheibe 13 wird die nach Fernsehnorm erforderliche abzutastende Zeilenzahl der Bildvorlage 20, z.B. 625 Zeilen pro Bild, bestimmt. Mit
der zweiten Scheibe 14 wird die nach Fernsehnorm erforderliche Bildfrequenz,
z.B. 25 Bilder/sec, festgelegt. Vorzugsweise wird dabei die Bildvorlage 20
derart abgetastet, daß nacheinander zwei Halbbilder der Bildvorlage zu je
n/2 Zeilen, also 312,5 Zeilen, entstehen, die dann im Fernsehgerät zu
einem vollständigen Bild zusammengesetzt werden. Dabei werden im ersten
Halbbild immer nur die ungeradzahligen Zeilen und im zweiten Halbbild die
geradzahligen Zeilen abgetastet. Um bei dieser Fernsehnorm (zwei Halbbilder
zu je 312,5 Zeilen) die Bildvorlage 20 richtig abzutasten, ist auf der ersten
Scheibe 13 eine Anzahl von radial ausgerichteten gekrümmten Schlitzen 15
vorgesehen, die der Zeilenzahl n/2 entspricht. Diese Schlitze 15 sind mit
konstantem Abstand gleichmäßig am Umfang verteilt. Im vorliegenden Fall
sind 312 Schlitze 15 mit einem Abstand auf der Scheibe 13 angeordnet, der dem
Quotienten aus Scheibenumfang und der Zeilenzahl n/2 entspricht. Der Abstand
des ersten und letzten Schlitzes 15 auf der Scheibe 13 ist um die Hälfte
größer.

radial ausgerichteten, gekrümmten,
In der zweiten Scheibe 14 ist eine Vielzahl von Schlitzen 16 vorgesehen,
die nacheinander die Bildvorlage 20 überstreichen. Der Abstand der Schlitze
16 voneinander ist dabei so gewählt, daß einerseits immer nur jeweils ein
Schlitz 16 die Bildvorlage 20 überstreicht und andererseits der Abstand von
in Rotationsrichtung der Scheibe 14 aufeinanderfolgender Schlitze 16 abwechseln proportional (n - 1)/2 bzw. (n + 1)/2 ist. Da die Gesamtzahl n
der abzutastenden Zeilen hier 625 ist, ist also der Abstand aufeinanderfolgender Schlitze 16 abwechselnd proportional der Größe 312 und der
Größe 313. Der jeweilige Abstand der Schlitze 16 ist in Fig. 3 mit a bzw. b
bezeichnet.

Die Geschwindigkeit der zweiten Scheibe 14 ist nunmehr derart bemessen, daß zwei hintereinanderliegende Schlitze 16 die Bildvorlage 20 in einer der Bildfrequenz von Fernsehgeräten entsprechenden Zeit nacheinander überstreichen. Diese Bildfrequenz beträgt üblicherweise 25 Bilder/sec, so daß die Bildvorlage 20 von einem Schlitz innerhalb von 1/50 sec bzw. in 20 msec überstrichen wird.

Die Geschwindigkeit der ersten Scheibe 13 ist hingegen so bemessen, daß während des Überstreichens eines Schlitzes 16 in der zweiten Scheibe 14 über die Bildvorlage 20 $\frac{n-1}{2} - m$ bzw. $\frac{n+1}{2} - m$ Schlitze 15 in der ersten Scheibe 13 die Bildvorlage 20 überstreichen. Hierbei gibt m die Anzahl derjenigen Schlitze 15 in der ersten Scheibe 13 an, die von der Bildvorlage 20 gleichzeitig abgedeckt werden.

Die Breite der Schlitze 15 bzw. 16 ist etwa 0,1 - 0,2 mm gewählt. Die Länge der Schlitze 15, 16 ist so bemessen, daß jeder Schlitz 15, 16 beim Überstreichen der Bildvorlage 20 jederzeit mindestens über die Bildvorlage 20 hinwegreicht (vgl. Fig. 4 und 5). Der Neigungswinkel $\alpha$ zwischen den Schlitzen 15 in der ersten Scheibe 13 und deren Bewegungs- bzw. Rotationsrichtung (Pfeil 37 in Fig. 4) ist derart bemessen, daß dessen Tangensfunktion gleich dem Quotienten aus der quer zur Bewegungsrichtung (Pfeil 37) gemessenen Höhe h der Bildvorlage 20 (in Fig. 4 strichpunktiert eingezeichnet) und dem in Bewegungsrichtung (Pfeil 37) gemessenen, um eine Wegstrecke c für die Bildpunktaustastung verminderten Schlitzabstand d ist. Diese nach Fernsehnorm vorgeschriebene Bildpunkt- oder auch Zeilenaustastung beträgt etwa 18 % der Bildpunktfrequenz. Eine solche Bildpunktaustastung liegt zwischen jedem Ende einer wiedergegebenen Zeile und dem Beginn einer neuen Zeile.

Der Neigungswinkel $\beta$ zwischen den Schlitzen 16 in der zweiten Scheibe 14 und deren Bewegungs- oder Rotationsrichtung (Pfeil 38 in Fig. 5) ist derart gewählt, daß der in Bewegungsrichtung (Pfeil 38) gemessene Abstand e zwischen dem am oberen Rand 39 der in Bewegungsrichtung (Pfeil 38) sich erstreckenden Seitenränder 39, 40 der Bildvorlage 20 liegenden Schlitzende und dem am unteren Rand 40 der Bildvorlage 20 liegenden Schlitzende von der zweiten Scheibe 14 in dem gleichen Zeitintervall durchlaufen wird, in dem die erste Scheibe 13 die Wegstrecke d – c durchläuft. Dies bedeutet, daß das Verhältnis aus der Wegstrecke d – c zu der Rotationsgeschwindigkeit der ersten Scheibe 13 gleich dem Verhältnis aus der Wegstrecke e zu der Rotationsgeschwindigkeit der zweiten Scheibe 14 ist. Durch diese Anordnung der Schlitze 15 bzw. 16 auf der Scheibe 13 bzw. 14 in Verbindung mit deren Krümmung wird sichergestellt, daß der Kreuzungspunkt zwischen jeweils zwei Schlitzen 15 und 16, der die Lichtdurchtrittsöffnung für den abgetasteten Bildpunkt freigibt, eine gleichmäßige und geradlinige, quer zur Bewegungsrichtung (Pfeil 37, Pfeil 38) der Scheiben 13, 14 verlaufende Bewegung ausführt. Dabei wird punktweise exakt eine quer zur Bewegungsrichtung (Pfeil 37, Pfeil 38) der Scheiben 13, 14 liegende Zeile der Bildvorlage 20 abgetastet.

In der nachstehenden Tabelle ist ein praktisches Ausführungsbeispiel für die Bemessung des vorstehend beschriebenen Schlitzblendensystems 10 mit seinen beiden rotierenden Scheiben 13, 14 angegeben. Dabei wird von einer Bildvorlage 20 ausgegangen, die dem Kleinbildformat eines Diapositivs entspricht. Die Abmessungen der Bildvorlage 20 auf der ersten Scheibe 13 betragen somit 24 x 36 mm, wobei sich die längeren Seitenkanten 20 quer zur Bewegungsrichtung (Pfeil 37, Pfeil 38) der beiden Scheiben 13, 14 erstrecken. Die Daten des Schlitzblendensystems 10 sind wie folgt:

| | Scheibe 13 | Scheibe 14 |
|---|---|---|
| Scheibendurchmesser | 200 mm | 200 mm |
| Bahngeschwindigkeit | $30215{,}9 \frac{mm}{sec}$ | $1200 \frac{mm}{sec}$ |
| Drezahl | $2885 \ min^{-1}$ | $114{,}59 \ min^{-1}$ |
| Anzahl der Schlitze | 312 | 26 |
| Schlitzbreite | 0,1 mm | 0,1 mm |
| Schlitzabstand (am Scheibenumfang gemessen) | 2,01 mm | a = 24,13 mm<br>b = 24,20 mm |
| Wegstrecke c für Bildpunktaustastung | 0,36 mm | ---- |
| Neigungswinkel der Schlitze zur Bewegungsrichtung | $\tan \alpha = \frac{36}{1{,}65}$ | $\tan \beta = \frac{36}{0{,}065}$ |

-.-.-.-.-.-.-.-.-

Rollei-Werke
Franke & Heidecke
GmbH & Co KG
Salzdahlumer Str. 196

3300 Braunschweig                    02.02.1979
                                     A 1155 EU


Patentansprüche


1. Vorrichtung zur punktweisen Abtastung einer Bildvorlage, insbesondere eines Diapositivs oder eines Super-8-Films, für dessen Wiedergabe in Fernsehgeräten, mit einem angetriebenen Schlitzblendensystem mit zwei in parallelen Ebenen relativ zueinander bewegten Schlitzblenden, die jeweils mindestens einen Schlitz aufweisen, wobei die Schlitze beider Schlitzblenden sich zumindest im Bereich der Bildvorlage kreuzen und so eine über die Bildvorlage gleichmäßig bewegte, in etwa punktförmige Lichtdurchtrittsöffnung freigeben, dadurch gekennzeichnet, daß die Schlitzblenden (11, 12) zumindest im Bereich der Bildvorlage (20) sich gegeneinander in gegensinniger Bewegungsrichtung (Pfeil 37, Pfeil 38) verschieben und daß die Schlitze (15, 16) in den beiden Schlitzblenden (11, 12) gegeneinander und in die jeweilige Bewegungsrichtung (Pfeil 37, Pfeil 38) geneigt ausgerichtet sind.


2. Vorrichtung nach Anspruch 1, dadurch gekennzeichnet, daß mittels der einen, ersten Schlitzblende (11) die nach Fernsehnorm erforderliche abzutastende Zeilenzahl $n$ der Bildvorlage (20) und mittels der anderen, zweiten Schlitzblende (12) die nach Fernsehnorm erforderliche Bildfrequenz bestimmt ist.

3. Vorrichtung nach Anspruch 1 oder 2, dadurch gekennzeichnet, daß die beiden Schlitzblenden (11, 12) endlos umlaufend ausgebildet sind.

4. Vorrichtung nach Anspruch 3 für die Wiedergabe der Bildvorlage in Fernsehnorm mit zwei Halbbildern zu je n/2 Zeilen (z.B. n = 625 Zeilen/Bild), dadurch gekennzeichnet, daß die Anzahl der Schlitze (15) auf der ersten Schlitzblende (11) der Zeilenzahl n/2 pro Halbbild entspricht.

5. Vorrichtung nach Anspruch 4, dadurch gekennzeichnet, daß in der zweiten Schlitzblende (12) eine Vielzahl von nacheinander einzeln die Bildvorlage (20) überstreichenden Schlitzen (16) vorgesehen ist, deren Abstand voneinander derart ist, daß immer nur jeweils ein Schlitz (16) die Bildvorlage (20) überstreicht, und daß der Abstand in Bewegungsrichtung (Pfeil 38) der Schlitzblende (12) aufeinanderfolgender Schlitze (16) abwechselnd proportional (n - 1)/2 bzw. (n + 1)/2 ist.

6. Vorrichtung nach Anspruch 4 oder 5, dadurch gekennzeichnet, daß die Geschwindigkeit der zweiten Schlitzblende (12) derart bemessen ist, daß zwei hintereinanderliegende Schlitze (16) die Bildvorlage (20) in einer der Bildfrequenz von Fernsehgeräten entsprechenden Zeit nacheinander überstreichen.

7. Vorrichtung nach einem der Ansprüche 4 - 6, dadurch gekennzeichnet, daß die Geschwindigkeit der ersten Schlitzblende (11) so gewählt ist, daß während des Überstreichens eines Schlitzes (16) in der zweiten Schlitzblende (12) über die Bildvorlage (20) $\frac{n-1}{2} - m$ bzw. $\frac{n+1}{2} - m$ Schlitze (15) in der ersten Schlitzblende (11) die Bildvorlage (20) überstreichen, wobei m die Anzahl der Schlitze (15) in der ersten Schlitzblende (11) ist, die von der Bildvorlage (20) gleichzeitig abgedeckt werden.

- 3 -

8. Vorrichtung nach einem der Ansprüche 1 - 7, dadurch gekennzeichnet, daß die Länge der Schlitze (15, 16) in beiden Schlitzblenden (11, 12) so bemessen ist, daß jeder Schlitz (15, 16) bei Überstreichen der Bildvorlage (20) mindestens über diese hinwegreicht.

9. Vorrichtung nach einem der Ansprüche 1 - 8, dadurch gekennzeichnet, daß der Neigungswinkel ($\alpha$) zwischen den Schlitzen (15) in der ersten Schlitzblende (11) und deren Bewegungsrichtung (Pfeil 37) derart gewählt ist, daß dessen Tangensfunktion gleich dem Quotienten aus der quer zur Bewegungsrichtung (Pfeil 37) gemessenen Höhe (h) der Bildvorlage (20) und dem in Bewegungsrichtung (Pfeil 37) gemessenen, um eine Wegstrecke (c) für die Bildpunktaustastung verminderten Schlitzabstand (d) ist.

10. Vorrichtung nach einem der Ansprüche 1 - 9, dadurch gekennzeichnet, daß der Neigungswinkel ($\beta$) zwischen den Schlitzen (16) in der zweiten Schlitzblende (12) und deren Bewegungsrichtung (Pfeil 38) derart gewählt ist, daß der in Bewegungsrichtung (Pfeil 38) gemessene Abstand (e) zwischen dem am oberen Rand (39) der in Bewegungsrichtung (Pfeil 38) sich erstreckenden Seitenränder (39, 40) der Bildvorlage (20) liegenden Schlitzende und dem am anderen Rand (40) der Bildvorlage (20) liegenden Schlitzende von der zweiten Schlitzblende (12) in dem gleichen Zeitintervall durchlaufen wird, in dem die erste Schlitzblende (11) den in Bewegungsrichtung (Pfeil 37) gemessenen, um die für die Bildpunktaustastung erforderliche Wegstrecke (c) verminderten Schlitzabstand (d) durchläuft.

11. Vorrichtung nach einem der Ansprüche 3 - 10, dadurch gekennzeichnet, daß die Schlitzblenden (11, 12) als rotierende, koaxiale Scheiben (13, 14) ausgebildet sind.

12. Vorrichtung nach Anspruch 11, dadurch gekennzeichnet, daß die Scheiben (13, 14) einen transparenten Scheibenkörper (32) aufweisen, der beidseitig mit einer die Schlitze (15, 16) aussparenden opaken Schicht (33, 34) belegt, vorzugsweise bedampft, ist.

13. Vorrichtung nach Anspruch 11 oder 12, dadurch gekennzeichnet, daß die Schlitze (15, 16) in beiden Scheiben (13, 14) radial angeordnet und zueinander gegensinnig gekrümmt sind, derart, daß die von zwei Schlitzen (15, 16) freigegebene Lichtdurchtrittsöffnung sich mit konstanter Geschwindigkeit quer zur Bewegungsrichtung (Pfeil 37, Pfeil 38) der Scheiben (13, 14) über die Bildvorlage (20) bewegt.

14. Vorrichtung nach einem der Ansprüche 1 - 13, dadurch gekennzeichnet, daß die Bildvorlage (20) mittels einer Projektionseinrichtung (17) unmittelbar auf eine, vorzugsweise die erste, Schlitzblende (11) projiziert ist.

-.-.-.-.-.-.-

Fig. 1

Fig. 2

Fig. 3

Fig. 6

Fig. 4

Fig. 5

0015405

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | FR - A - 734 378 (ARNOULD) | 1 |
| A | DE - C - 557 670 (RITTERSHAUSEN) | 1 |
| | GB - A - 295 653 (SZENYOVSKY) * Seite 2, Zeilen 4-54 * | 1 |

-----

**KLASSIFIKATION DER ANMELDUNG (Int.Cl. 3)**

H 04 N 3/36

**RECHERCHIERTE SACHGEBIETE (Int. Cl. 3)**

H 04 N 3/36
3/04
9/11

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 17-06-1980 | SIX |

EPA form 1503.1 06.78